# EUROPÄISCHE PATENTANMELDUNG

(11) **EP 0 927 900 A1**
(43) Veröffentlichungstag der Anmeldung: **07.07.1999**
(21) Anmeldenummer: 98123985.8
(22) Anmeldetag: 17.12.1998
(51) Int. Cl.: G02B 6/44

(54) **Verfahren zum Herstellen von Kabelabzweigen**

(30) Priorität: 29.12.1997 DE 19756954
(71) Anmelder: REHAU AG + Co, 95111 Rehau (DE)
(72) Erfinder: Beyer, Wolfgang c/o Rehau AG & Co., 95111 Rehau (DE)

(57) **Zusammenfassung**

Die Erfindung betrifft ein Verfahren zum Herstellen von Kabelabzweigen an den Schutzrohren verlegten Glasfaserkabeln. Dabei wird das Schutzrohr über der Abzweigstelle entfernt, der Kabelmantel des Glasfaserkabels in diesem Bereich geöffnet und die für den Abweig vorgesehene Glasfaserbündeladerhülle wenigstens in Teilbereichen geöffnet. Die ausgewählten Glasfasern werden an einem der Öffnungsbereiche durchgetrennt und aus dem anderen Öffnungsbereich als Faserlänge herausgezogen. Jedes freie Ende der Faserlängen mit dem zugehörigen Ende einer Faser aus dem Abzweigkabel wird gespleißt und die Öffnungsbereiche werden mit muffenartigen Bauteilen verschlossen. Die Erfindung wird darin gesehen, daß in einem ersten Verfahrensschritt das Schutzrohr auf eine vorgegebene Teillänge entfernt und der Kabelmantel auf diese Teillänge unter Freilegung der Glasfaserbündeladerhüllen wenigstens teilweise abgeschält wird. In einem anschließenden zweiten Verfahrensschritt wird dann eine vorgegebene Teillänge des Schutzrohres radial durchtrennt, so daß diese Teillänge auf dem Glasfaserkabel frei verschieblich ist. Diese verschiebliche Teillänge des Schutzrohres wird auf die Teillänge des abeschälten Kabelmantels verschoben und der damit freigelegte Kabelmantelbereich entsprechend abgeschält. Nach dem Öffnen einer Glasfaserbündeladerhülle, dem Schneiden und das Herausziehen der zum Spleißen bestimmten Einzelfasern und dem Spleißen mit den Abzweigfasern wird die verschiebliche Teillänge des Schutzrohres auf dem Glasfaserkabel in eine Stellung verschoben, in der zwischen den freien Enden des anstehenden Schutzrohres und den freien Enden der verschieblichen Teillänge des Schutzrohres annähernd gleiche Schutzrohr-Öffnungsbereiche entstehen, welche mit entsprechenden Bauteilen verschlossen werden.

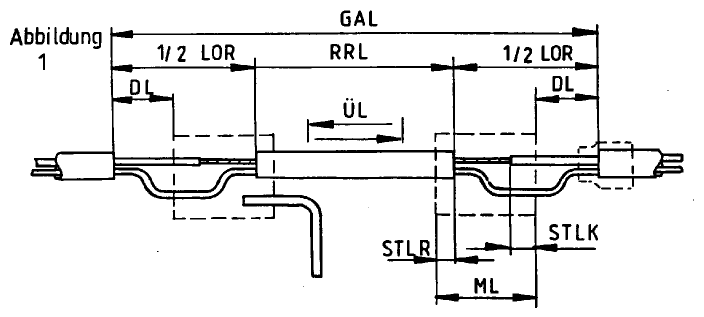

## Beschreibung

Die Erfindung betrifft ein Verfahren zum Herstellen von Kabelabzweigen an in Schutzrohren veriegten Glasfaserkabeln, wobei das Schutzrohr über der Abzweigstelle entfernt, der Kabelmantel des Glasfaserkabels in diesem Bereich geöffnet und die für den Abzweig vorgesehene Glasfaserbündeladerhülle wenigstens in Teilbereichen geöffnet wird, wobei die ausgewählten Glasfasern an einem der Öffnungsbereiche durchgetrennt und aus dem anderen Öffnungsbereich als Faserlänge herausgezogen werden und wobei jedes freie Ende der Faserlängen mit dem zugehörigen Ende einer Faser aus dem Abzweigkabel gespleißt wird und die Öffnungsbereiche mit muffenartigen Bauteilen verschlossen werden.

Ein gattungsgemäßes Verfahren ist aus der EU 0 584 600 A1 bekannt. Dort ist ein Verfahren zum Abzweigen einzelner Lichtwellenleiteradern aus einem ungeschnittenen Lichtwellenleiterkabel beschrieben. Dabei wird das Lichtwellenleiterkabel in einem Anschneidebereich und in einem Spleißbereich geöffnet, wobei die beiden Öffnungsstellen einen Abstand voneinander aufweisen, der der gewünschten Länge der zum Spleißen erforderlichen Lichtwellenleiterader entspricht.

Zur Durchführung dieses Verfahrens wird im Anschneidebereich die abzuzweigende Lichtwellenleiterader nach Entfernung des Kabelmantels abgetrennt und aus der Öffnung des Spleißbereiches herausgezogen. Diese Lichtwellenleiteraderlänge wird danach mit einer Abzweigader gespleißt und danach werden die geöffneten Anschneide- bzw. Spleißbereiche des Lichtwellenleiterkabels mittels geeigneter Muffen überdeckt und abgedichtet.

Die bekannte Technik arbeitet mit der Möglichkeit, einzelne Lichtwellenleiteradern aus Lichtwellenleiterkabel auf eine vorbestimmte Länge herauszuziehen, um diese Länge dann auf eine abzweigende Lichtwellenleiterader zu spleißen. Hierbei kann das von der Vermittlungsstelle ausgehende Lichtwellenleiterkabel mit den einzelnen Lichtwellenleiteradern immer weiter aufgeteilt werden, um die Endabnehmerstellen an das Kabel anzuschließen. Dabei entsteht ein sogenanntes Sternnetz mit weiten Verzweigungen, aber auch mit endlichen Anschlußstellen. Diese Technik ist bei Kupferkabelnetzen üblich und wurde anfänglich auch bei Glasfaserkabelnetzen verwendet.

Da über Glasfaserkabelnetze aber ein Vielfaches im Vergleich zu den Kupferkabelnetzen übertragen werden kann, ging die Technik bei Lichtwellenleiterkabel auf ein redundantes Kabelnetz über, welches heute in Form von Ringnetzen aufgebaut wird. Der Vorteil solcher Ringnetze liegt in der Störsicherheit bei Leitungsunterbrechungen, da die Endstellen im Ring jeweils von zwei Seiten aus versorgt werden können. Diese Technik verlangt allerdings, daß der Ring immer geschlossen wird, auch an den abzweigenden Stellen. So besteht bei dieser Technik die Anforderung, die Endabnehmerstellen an beide Seiten des Ringes anzuschließen.

Bei vorgeplanten Abzweigstellen mit Kabelvorrat, z B im Erdboden, im Schacht usw., ist zur Verbindung des Hauptkabels mit dem Abzweigkabel jeweils genügend Faservorrat vorhanden. Dagegen ist bei Abzweigungen in der Kabeltrasse, also ohne Kabelvorrat, eine einfache Montage nicht mehr möglich. Hier schafft der Stand der Technik auch keine Abhilfe, da mit den geschilderten Möglichkeiten kein redundantes Ringnetz mit praktikablen Faserlängen zum Spleißen aufgebaut werden kann.

Hier setzt die Erfindung ein, die es sich zur Aufgabe gestellt hat, auch in verrohrten Kabelstrecken ohne Vorratslängen einen beidseitigen Anschluß mit einfachen Mitteln und kleinen Kabelmuffen herzustellen. Erfindungsgemäß wird dazu vorgeschlagen, daß in einem ersten Verfahrensschritt das Schutzrohr auf eine vorgegebene Teillänge entfernt und der Kabelmantel auf die Teillänge unter Freilegung der Glasfaserbündeladerhüllen wenigstens teilweise abgeschält wird, daß danach in einem zweiten Verfahrensschritt eine vorgegebene Teillänge des Schutzrohres radial durchtrennt wird, so daß diese Teillänge auf dem Glasfaserkabel frei verschieblich ist, daß die Teillänge auf die Teillänge des abgeschälten Kabelmantels verschoben und der damit freigelegte Kabelmantelbereich entsprechend abgeschält wird, und daß nach dem Öffnen einer Glasfaserbündeladerhülle, dem Schneiden und Herausziehen der zum Spleißen bestimmten Einzelfasern und dem Spleißen mit den Abzweigfasern die verschiebliche Teillänge auf dem Glasfaserkabel in eine Stellung verschoben wird, in der zwischen den freien Enden des anstehenden Schutzrohres und den freien Enden der verschieblichen Teillänge annähernd gleiche Schutzrohr-Öffnungsbereiche entstehen, welche mit entsprechenden Bauteilen verschlossen werden.

Die Erfindung macht sich den Umstand zunutze, daß Glasfaserkabel heute ausschließlich in Schutzrohren verlegt werden und daß ein erfindungsgemäß vorgegebener Rohrabschnitt an der Abzweigstelle als Teil der Kabelmuffe mitverwendet werden kann. Dadurch lassen sich beliebig freie Faserenden gewinnen, welche den zum Spleißen notwendigen Faservorrat auch bei Abzweigungen in der Kabeltrasse ergeben. Der weitere Vorteil der Erfindung ist, daß die verschiebliche Teillänge des Schutzrohres so zwischen den freien Enden des anstehenden Schutzrohres placiert werden kann, daß beispielsweise gleiche Muffen zum Verschließen der Anschneide- und der Spleißöffnung verwendet werden können. Auf diese Weise wird die Vorrathaltung an Muffen vereinfacht und die Kosten entsprechend gesenkt.

Ein weiterer Vorteil der Erfindung wird darin gesehen, daß bei relativ kleinen Öffnungsbereichen des Schutzrohres auch kleine Kabelmuffen verwendet werden können, wodurch die Kosten weiter reduziert werden.

Wesentliches Merkmal der Erfindung ist jedoch die Tatsache, daß die freien Enden der verschieblichen Teillänge des Schutzrohres als Auflager für die zum Verschließen der Schutzrohröffnungen eingesetzten Kabelmuffen verwendet werden, so daß nicht die gesamte Öffnungslänge des Kabelschutzrohres mit einer Muffe entsprechender Länge verschlossen werden muß, sondern daß zwei weitaus kleinere Teilöffnungsbereiche über entsprechend kleinere Kabelmuffen verschlossen werden können.

Die Rohrverschiebetechnik der Erfindung läßt sich nicht nur bei zweiseitigen Abzweigungen einsetzen, sondern sie ist gleichermaßen auch bei einseitigen Abzweigungen einsetzbar. In diesem Fall muß nur eine Kabelmuffe verwendet werden, während die Abdichtung des freien Endes der Teillänge gegen das anstehende Rohrende über z. B. eine Schrumpfmanschette erfolgt.

Es hat sich hierbei als vorteilhaft erwiesen, daß die Gesamtanschnittlänge des Schutzrohres, die Länge des Glasfaserkabels ohne Rohr und die auf diesem verschiebliche Teillänge des Schutzrohres durch die Abmessungen der zum Verschluß der Öffnungen gewählten Bauteile bestimmt werden.

Die Länge der zur Verfügung stehenden Kabelmuffen kann also nach dem erfindungsgemäßen Verfahren zur Bestimmung der Öffnungsgrößen des Schutzrohres herangezogen werden. Für die Benutzung gleicher Bauteile ist es wesentlich, daß die verschiebliche Teillänge des Schutzrohres vor dem Verschluß durch die Bauteile mittig auf der Gesamtanschnittlänge des Schutzrohres angeordnet wird. Auf diese Weise lassen sich gleiche Schutzrohr-Öffnungsbereiche erzielen, die durch gleiche Bauteile verschlossen werden können.

Bei der Durchführung des erfindungsgemäßen Verfahrens sind vor der Berechnung der Einzellängen die Längen der einzusetzenden Bauteile zu ermitteln. Im nachstehend beschriebenen Beispiel wird eine Kabelmuffe mit der Bezeichnung UCSO 4 bis 6 mit einer Muffenlänge von 37 cm zugrunde gelegt. Die Befestigungslänge von Rohr oder Kabel innerhalb dieser Muffe ist mit 5 cm festgelegt. Weiterhin ist die erforderliche Distanz zwischen Rohrtrasse und Muffeneingang wichtig, da hier evtl. nachfolgend Abdichtmaßnahmen, z B durch Schrumpfmanschetten oder ähnliche Bauteile ergriffen werden müssen. Im Beispielsfall werden für diese Distanzlänge (DL) 30 cm je Seite festgelegt.

In dem als Abbildung 1 beigefügten Schaubild ist die Aufteilung der Teillängen und ihrer Bezeichnung dargestellt. Die anschließende Tabelle 1 zeigt die Einzelmaße sowie die Gesamtmaße der Teillängen aus dem Schaubild.

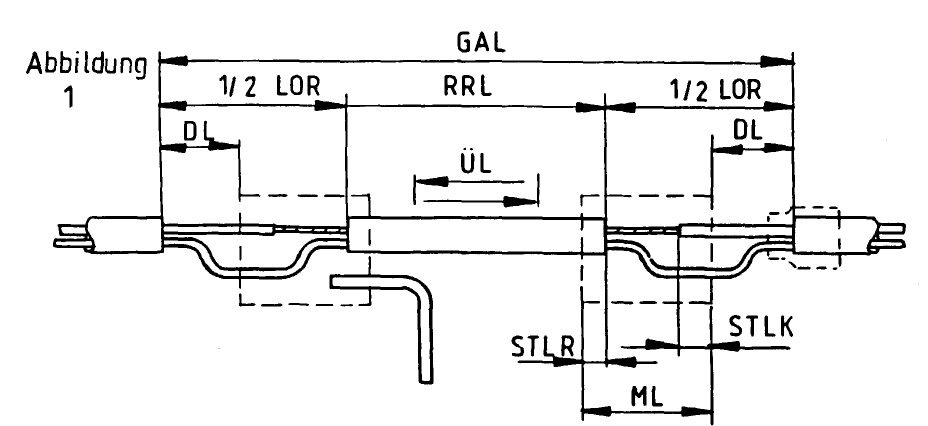

**Tabelle 1**

| **Teillänge** | **Kurzbezeichnung** | **Einzelmaß** | **Anzahl** | **Gesamtmaß** |
|---|---|---|---|---|
| Kabelmuffenlänge (z B UCSO 4-6) | ML | 37 cm | 2 | 74 cm MLG |
| Distanz von Rohrtrasse bis zur Kabelmuffe | DL | 30 cm | 2 | 60 cm DLG |
| Einstecklänge des Rohres in die Kabelmuffe | STLR | 5 cm | 2 | 10 cm STLRG |
| Einstecklänge des Kabels in die Kabelmuffe | STLK | 7 cm | 2 | 14 cm STLKG |
| Überlappungslänge | ÜL | 10 cm | 1 | 10 cm ÜL |

Zur Berechnung der schutzrohrfreien Länge (Länge ohne Rohr LOR) gilt:
LOR = DLG + MLG - STLRG
LOR = 60 cm + 74 cm - 10 cm
LOR = 124 cm

Für die Berechnung der verschieblichen Teillänge des Schutzrohres (Rohrrestlänge RRL) gilt folgendes:
RRL = LOR - ÜL
RRL = 124 cm - 10 cm
RRL = 114 cm

Die Berechnung der Gesamtanschnittlänge der Rohrtrasse (GAL) ergibt folgendes:
GAL = LOR + RRL
GAL = 124 cm + 114 cm
GAL = 238 cm

Im Einsatzfall ist die Kabelgrabenöffnung ca. 1 m größer zu wählen, d. h. GAL + 1 m = 3,38 m.

Für die Berechnung der Kabelanschnittlänge (KAL) gilt folgendes:
KAL = RRL + MLG - STLRG -STLKG
KAL= 114 cm + 74 cm - 10 cm - 14 cm
KAL = 164 cm

Damit betragt die effektive Faserlänge für die erforderlichen Spleißungen je Seite ca. 80 cm.

## Patentansprüche

1. Verfahren zum Herstellen von Kabelabzweigen an in Schutzrohren verlegten Glasfaserkabeln, wobei das Schutzrohr über der Abzweigstelle entfernt, der Kabelmantel des Glasfaserkabels in diesem Bereich geöffnet und die für den Abzweig vorgesehene Glasfaserbündeladerhülle wenigstens in Teilbereichen geöffnet wird, wobei die ausgewählten Glasfasern an einem der Öffnungsbereiche durchgetrennt und aus dem anderen Öffnungsbereich als Faserlänge herausgezogen werden, und wobei jedes freie Ende der Faserlängen mit dem zugehörigen Ende einer Faser aus dem Abzweigkabel gespleißt wird und die Öffnungsbereiche mit muffenartigen Baueilen verschlossen werden, dadurch gekennzeichnet, daß in einem ersten Verfahrensschritt das Schutzrohr auf eine vorgegebene Teillänge entfernt und der Kabelmantel auf diese Teillänge unter Freilegung der Glasfaserbündeladerhüllen wenigstens teilweise abgeschält wird, daß danach in einem zweiten Verfahrensschritt eine vorgegebene Teillänge des Schutzrohres radial durchtrennt wird, so daß diese Teillänge auf dem Glasfaserkabel frei verschieblich ist, daß die verschiebliche Teillänge des Schutzrohres auf die Teillänge des abgeschälten Kabelmantels verschoben und der damit freigelegte Kabelmantelbereich entsprechend abgeschält wird, und daß nach dem Öffnen einer Glasfaserbündeladerhülle dem Schneiden unter Herausziehen der zum Spleißen bestimmten Einzelfasern und dem Spleißen mit den Abzweigfasern die verschiebliche Teillänge des Schutzrohres auf dem Glasfaserkabel in eine Stellung verschoben wird, in der zwischen den freien Enden des anstehenden Schutzrohres und den freien Enden der verschieblichen Teillänge des Schutzrohres annähernd gleiche Schutzrohr-Öffnungsbereiche entstehen, welche mit entsprechenden Bauteilen verschlossen werden.

2. Verfahren nach Anspruch 1, dadurch gekennzeichnet, daß die Gesamtanschnittlänge des Schutzrohres, die Länge des Glasfaserkabels ohne Rohr und die auf diesem verschiebliche Teillänge des Schutzrohres durch die Abmessungen der zum Verschluß der Öffnung gewählten Bauteile bestimmt werden.

3. Verfahren nach Ansprüchen 1 und 2, dadurch gekennzeichnet, daß die verschiebliche Teillänge des Schutzrohres vor dem Verschluß durch die Bauteile mittig auf der Gesamtanschnittlänge des Schutzrohres angeordnet wird.
